# EUROPEAN PATENT SPECIFICATION

(11) **EP 2 313 686 B1**
(45) Date of publication and mention of the grant of the patent: **10.08.2016**
(21) Application number: 09764940.4
(22) Date of filing: 25.06.2009
(51) Int. Cl.: F23C 5/32, F23C 9/00, F23D 1/02, F23L 7/00, F24H 3/12

(54) **A FURNACE SYSTEM WITH INTERNAL FLUE GAS RECIRCULATION**
OFENSYSTEM MIT INNERER RAUCHGASRÜCKFÜHRUNG
SYSTÈME DE FOUR AVEC RECIRCULATION INTERNE DU GAZ DE COMBUSTION

(30) Priority: 25.06.2008 US 75451 P; 24.06.2009 US 490818
(43) Date of publication of application: 27.04.2011
(73) Proprietor: ALSTOM Technology Ltd, 5400 Baden (CH)
(72) Inventor: KANG, Shin, G., Simsbury CT 06089 (US); LEVASSEUR, Armand, A., Windsor Locks CT 06095 (US); TUREK, David, G., South Windsor Connecticut 06074 (US)
(74) Representative: General Electric Technology GmbH
(86) International application number: PCT/US2009/048606
(87) International publication number: WO 2009/158465

(56) References cited:
- EP-A2- 2 116 765
- FR-A1- 2 825 777
- GB-A- 2 134 921
- US-A- 4 294 178
- US-A- 5 309 850
- US-A- 5 511 971
- US-B1- 6 383 462

## Description

### TECHNICAL FIELD

The present invention relates generally to a fossil fuel fired furnace system, and more particularly, to an oxyfuel fired furnace system having an internal flue gas recirculation system.

### BACKGROUND

Steam generators, also referred to as boilers or furnaces, are used in various systems. For example, boilers can be used to produce steam for use in electric turbines and in chemical processes for providing energy to initiate a chemical reaction. The combustion process employed in boilers often utilizes fossil fuels such as coal or oil. Generally, during the combustion process pollutants such as unburned fuel, particulate, ash, NOx and other combustion byproducts are generated. If allowed to enter the atmosphere in sufficient amounts, these pollutants can detrimentally impact the environment and pose health hazards to humans and animals.

From US 4, 294, 178 a furnace is known that bums pulverized coal. A part of the flue gas is recirculated back to the furnace to reduce the combustion temperature.

From US 5, 309, 850 a closed combustion system is known that is used to incinerate hazardous wastes and vitrify ash. An incinerator is provided that is supplied with pure oxygen, hazardous waste and fuel for incinerating the hazardous waste. Using pure oxygen results in higher flame temperatures than those in air fired boilers.

### SUMMARY OF THE INVENTION

According to aspects illustrated herein, there is provided a furnace system including a combustion vessel. A flue duct is coupled to an outlet end of the combustion vessel and is in fluid communication with an interior area defined thereby. A recirculation duct also forms a portion of the furnace system and extends outwardly from the flue duct and provides fluid communication between the flue duct and the interior area of the combustion vessel.

According to the invention as defined in claim 1, a conveying device is disposed at least partially in the recirculation duct for facilitating flow of one or more fluids through the recirculation duct into the interior area of the combustion vessel in response to commands issued from a controller. The conveying device is an eductor for conveying a fluid such as, but not limited to oxygen, steam, flue gas or combinations thereof into the interior area defined by the combustion vessel.

The above described and other features are illustrated by the following figures and detailed description.

### BRIEF DESCRIPTION OF THE DRAWINGS

Referring now to the Figures, which are exemplary embodiments, and wherein like elements are numbered alike:
FIG. 1 schematically illustrates a furnace system in accordance with an embodiment which is not covered by the present invention;
FIG. 2 schematically illustrates the furnace system of FIG. 1 with an eductor type conveying device in accordance with the present invention;
FIG. 3 schematically illustrates a portion of the furnace system of FIG. 1 and shows a fan-type conveying device hazardous waste; and
FIG. 4 is a cross sectional view of the furnace system of FIG. 1 showing a tangential firing configuration.

### DETAILED DESCRIPTION OF THE PREFERRED EMBODIMENTS

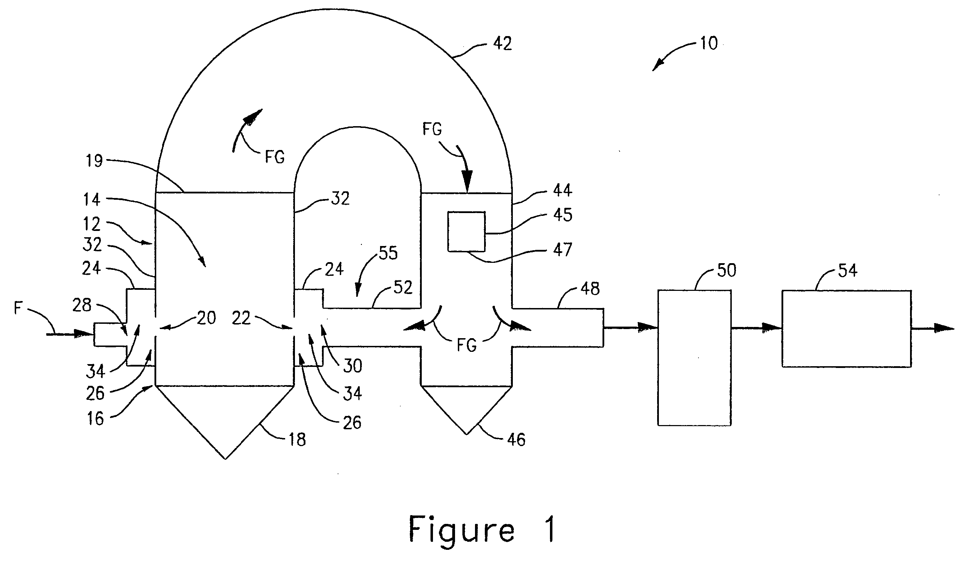

As shown in FIG. 1, a furnace system, generally designated by the reference number 10, includes a combustion vessel 12 defining an interior area 14. The combustion vessel 12 also defines a hopper 18 at a lower portion of an end 16 thereof. Generally opposite the hopper 18, the combustion vessel 12 defines a conduit 19 which during operation, conveys flue gases FG out of the combustion vessel. In the illustrated embodiment, the combustion vessel 12 also defines a first and a second aperture, 20 and 22 respectively, that open into the interior area 14.

Still referring to FIG. 1, a manifold 24 or wind box is coupled to the combustion vessel 12 and is in fluid communication with the interior area 14. The manifold 24 has an inwardly facing opening 26 and two outwardly facing openings 28 and 30. In the illustrated embodiment, the manifold 24 wraps around a portion of the combustion vessel 12. Portions of the manifold 24 are positioned over at least one of the first and second apertures, 20 and 22 respectively, such that an interior area 34 defined by the manifold is in fluid communication with the interior area 14 of the combustion vessel 12.

The interior area 14 of the combustion vessel 12 is also in fluid communication with flue duct 42 for facilitating the flow of flue gas FG therethrough. Similarly, flue duct 44 is in fluid communication with the flue duct 42 as well as with a second hopper section 46. A first heat exchanger, for example an economizer 45, is positioned in and is in fluid communication with the flue duct 44. During operation, the economizer 45 cools the flue gas FG flowing therethrough. A second heat exchanger 50, such as an air preheater, is positioned downstream of and is in fluid communication with the flue duct 44 via, in the illustrated embodiment, conduit 48. A second conduit 52 extends between and is in fluid communication with the flue duct 44 and the manifold 24. The second conduit 52 extends from the flue duct 44 downstream of an outlet 47 of the economizer 45.

While the economizer 45 is described as being one potential means of cooling the flue gas FG, other heat exchanger means may be employed, such as but not limited to ultra critical steam panels, steam heating means, steam production means and combinations thereof without departing from the broader aspects disclosed herein.

The second conduit 52 and the manifold 24 cooperate to define a recirculation duct 55 which provides fluid communication between the flue duct 44 and the interior area 14 of the combustion vessel 12. The second conduit 52 can be installed during initial construction of the furnace system 10 or can be installed during a retrofit operation, after initial construction. The furnace system 10 also includes a pollution control system 54 in fluid communication with, and positioned downstream of, the second heat exchanger 50.

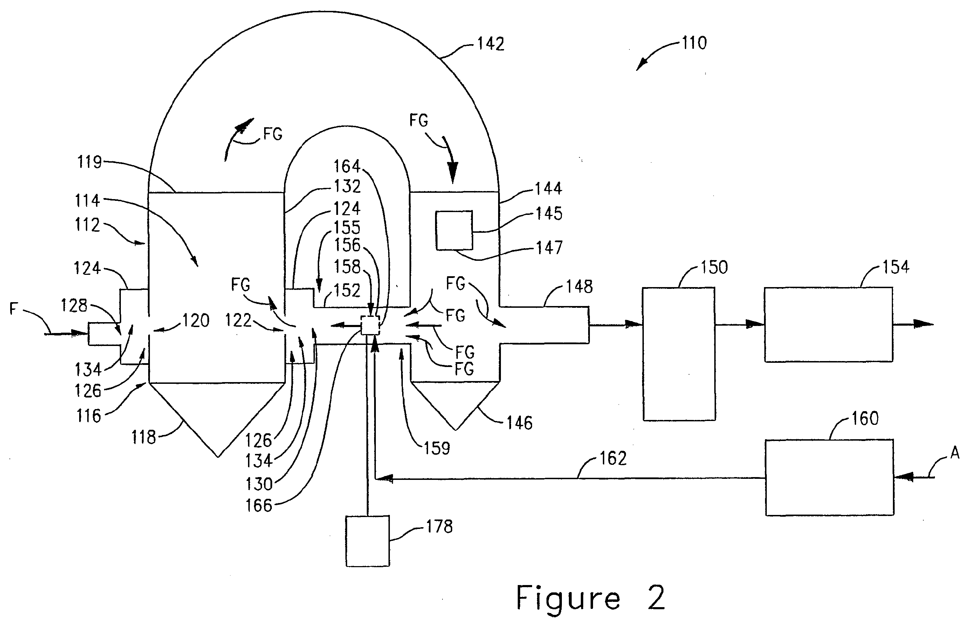

The furnace system of FIG. 2 is similar to that illustrated in FIG. 1, therefore like elements are assigned like numerals, preceded by the number 1. Accordingly the furnace system, generally designated by the reference number 110, includes a combustion vessel 112 defining an interior area 114. The combustion vessel 112 defines a first and a second aperture 120 and 122, respectively, that open into the interior area 114. A manifold 124 or wind box is coupled to the combustion vessel 112 and is in fluid communication with the interior area 114. The manifold 124 is positioned over at least one of the first and second apertures 120 and 122, respectively, such that an interior area 134 defined by the manifold is in fluid communication with the interior area 114 of the combustion vessel 112.

The interior area 114 of the combustion vessel 112 is in fluid communication with flue duct 142 for facilitating the flow of flue gas FG therethrough. Similarly, flue duct 144 is in fluid communication with the flue duct 142. A first heat exchanger, for example an economizer 145 is positioned in and is in fluid communication with the flue duct 144. A second conduit 152 extends between and is in fluid communication with flue duct 144 and the manifold 124. The second conduit 152 extends from the flue duct 144 downstream of an outlet 147 of the economizer 145. A second heat exchanger 150, such as an air preheater, is positioned downstream of and is in fluid communication with the flue duct 144 via, in the illustrated embodiment, conduit 148. The second conduit 152 and the manifold 124 cooperate to define a recirculation duct 155 which provides fluid communication between the flue duct 144 and the interior area 114 of the combustion vessel 112. The furnace system 110 further includes a pollution control system 154 in fluid communication with, and positioned downstream of, the second heat exchanger 150.

Still referring to FIG. 2, an eductor 156 is positioned in the second conduit 152 for facilitating flow of one or more fluids into the interior area 114 of the combustion vessel 112 in response to commands, for example a command signal regarding combustion vessel temperature regulation, steam production and/or steam parameter measurement, issued from a controller 178 such as, but not limited, to a computer or programmable logic controller. A motive fluid, such as oxygen, is supplied to a portion 158, such as a central portion, of the eductor 156 at a predetermined pressure e.g. 34473,78 to 344737,86 N/m² ( 5 to 50 psig). An air stream designated by arrow A, flows into an air separation unit 160 which separates nitrogen from the air and supplies oxygen to the eductor 156 via suitable piping 162. Flow of pressurized oxygen into the central portion 158 of the eductor, possibly by a nozzle, causes flue gas FG to be entrained into an inlet 164 of the eductor and discharged through an outlet 166 of the eductor together with the oxygen into the interior area 134 of the manifold 124 and into the interior area 114 of the combustion vessel 112.

While the air separation unit 160 is shown and described as supplying oxygen to the eductor 156, it is contemplated that other means of supplying the oxygen can be employed, including but not limited to an oxygen sources such as oxygen tanks and/or cylinders in addition to or in place of the air separation unit.

Recirculation of a portion of the flue gas FG into the combustion vessel 112 helps regulate furnace temperatures and steam conditions within a predetermined range and allows a greater mass flow of gas through the combustion vessel. In addition, recirculation of the flue gas FG into the combustion vessel reduces the overall mass flow rate of flue gas flowing downstream of the flue duct 144. The introduction of oxygen (or any low nitrogen fluid) into the combustion vessel 112 reduces pollutants and the recirculation of flue gas FG into the combustion vessel 112 reduces the mass flow rate of the flue gas FG to be treated by the pollution control system 154, thus smaller, less costly second heat exchangers 150 and pollution control systems can be employed.

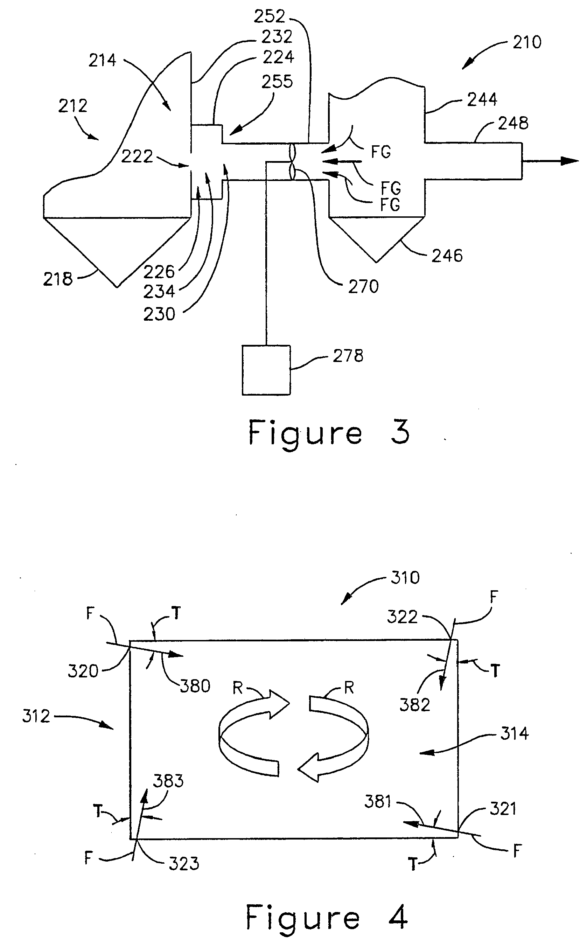

Although, oxygen is described as the motive fluid for use in the eductor 156, other fluids can be employed including but not limited to steam, flue gas, flue gas processed by the pollution control system 154 or a combination thereof. While the eductor 156 is shown and described as being positioned in the second conduit 152 for discharging oxygen and flue gas FG into the combustion vessel 112, other devices for conveying the flue gas into the combustion vessel can be employed including but not limited to a compressor, fan or blower as illustrated in FIG. 3 as described below. Although the eductor 156 is shown and described as being positioned in the second conduit 152, it is contemplated that portions of the eductor may extend outside of the second conduit, for example into the manifold 124, into the flue duct 144 and/or protrude into an external area 159 outside of the second conduit.

The furnace system of FIG. 3 is similar to that illustrated in FIG. 1, therefore like elements are assigned like numerals, preceded by the number 2. As illustrated in FIG. 3, the furnace system 210 includes a fan 270 disposed in the second conduit 252 for conveying flue gas FG from the flue duct 244 into the interior area 214 of the combustion vessel 212. The fan 270 is coupled to a drive unit (not shown) which operates the fan in response to a command signal, for example a command signal regarding combustion vessel temperature regulation, steam production and/or steam parameter measurement, issued by a controller 278 such as, but not limited to, a computer or programmable logic controller.

While a fan 270 is shown and described for conveying the flue gas FG from the duct 244 into the combustion vessel 212, other devices such as, but not limited to, blowers and compressors can be employed without departing from the broader aspects disclosed herein. Although the fan 270 is shown and described as being positioned in the second conduit 252, it is contemplated that portions of the fan and/or drive unit may extend outside of the second conduit, for example into the manifold 224, into the flue duct 144 and/or protrude into the external area 159 outside of the second conduit.

The furnace system of FIG. 4 is similar to that illustrated in FIG. 1, therefore like elements are assigned like numerals, preceded by the number 3. Referring to FIG 4, a tangentially fired furnace 310 includes a combustion vessel 312 having an interior area 314. The combustion vessel 312 is illustrated with four apertures 320, 321, 322 and 323 extending therethrough. A lance 380, 381, 382 and 383 is positioned in respective ones of the apertures 320, 321, 322 and 323 and oriented at a predetermined angle T measured from respective adjacent portions of the combustion vessel 312. The angle T is of an appropriate magnitude, for example an acute angle, to cause a fluid, such as oxygen, and fuel flowing through the lance to rotate in the interior area 314 as shown by the arrows R. The lances 380, 381, 382 and 383 extend into the interior area 336 of the combustion chamber 312 for improved control of the combustion process. While the lances 380, 381, 382 and 383 are shown and described as being positioned in respective ones of the apertures 320, 321, 322 and 323 and oriented at a predetermined angle T measured from respective adjacent portions of the combustion vessel 312, it is contemplated that nozzles can be substituted for or positioned on a distal end of the lances.

Referring back to FIG. 2, during operation, fuel F, such as pulverized coal, is conveyed into the interior area 134 of the manifold 124 through the opening 128 and into the interior area 114 of the combustion vessel 112 for initiation of combustion. The fuel F can be blown into the manifold 24 along with a combustion fluid such as oxygen. As a result of the combustion, flue gas FG exits the conduit end portion 119 of the combustion vessel 112 and flows through the flue ducts 142 and 144, respectively, to the second heat exchanger 150 and to the pollution control unit 154 for processing. A portion of the flue gas FG is re-circulated to the combustion vessel 112 through the second conduit 152 by operation of the eductor 156. The eductor 156 operates in response to a command signal, for example a command signal regarding combustion vessel temperature regulation, steam production and/or steam parameter measurement, generated from the controller 178. Operation of the eductor 156 causes pressurized oxygen to flow through the eductor and thereby entrain flue gas from the flue duct 144. The eductor 156 discharges the oxygen and the flue gas FG into the interior area 134 of the manifold 124 and into the interior area 114 of the combustion vessel 112. The oxygen is provided to the eductor 156 by the air separation unit 160.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A furnace system for combusting fuel and oxygen comprising:
An oxy-fuel combustion vessel (112) that receives fuel and oxygen for combustion therein, having an outlet end (116) and at least one aperture (120, 122), that opens into an interior area (114) defined by said oxy-fuel combustion vessel (112);
an oxygen source (160) to supply a gas stream of oxygen to the oxy-fuel combustion vessel (112);
a flue duct (144) coupled to said outlet end (116) and in fluid communication with said interior area (114);
a heat exchanger (145) disposed in said flue duct (144) for cooling at least one fluid flowing through said flue duct;
the recirculation duct (155) comprising a second conduit (152) and a manifold (124), the second conduit (152) extending from said flue duct (144), at a position downstream of said heat exchanger (145), to said at least one aperture (120, 122), and providing fluid communication between said flue duct (144) and said interior area (114) to provide greater mass flow to the oxy-fuel combustion vessel (112); and
a conveying means (156) for causing flow of at least one fluid through said recirculation duct into said interior area (114, 214), **characterized in, that**
an eductor (156) is positioned in the second conduit (152) for facilitating flow of one or more fluids into the interior area (114) of the combustion vessel (112) in response to commands issued from a controller (178), and **in that** the oxygen source (160) supplies oxygen to the eductor (156) via a suitable piping (162).

2. The furnace system of claim 1, wherein the conveying means (156, 270) is disposed at least partially in said recirculation duct (155, 255).

3. The furnace system of claim 1 or 2, further comprising a controller (178, 278) that provides a command signal to the conveying means, for controlling the flow of at least one fluid through said recirculation duct into said interior area (114).

4. The furnace system of claim 1 to 3, wherein said conveying means comprises at least one of a fan and a blower and a compressor (270).

5. The furnace system of claims 1 to 3, wherein said conveying means comprises the eductor (156) having a motive fluid supplied thereto for conveying said at least one fluid and said motive fluid into said interior area (114, 214, 314).

6. The furnace system of claim 5, wherein said motive fluid is oxygen.

7. The furnace system of claim 5, wherein said motive fluid is steam.

8. The furnace system of claim 5, wherein said motive fluid is flue gas.

9. The furnace system of one of the foregoing claims, further comprising:
a pollution control system (154) in fluid communication with said flue duct (144, 244) for processing flue gas discharged from said interior area (114, 214, 314);
a second heat exchanger (150) in fluid communication with said flue duct (144, 244); and wherein
said recirculation duct (155, 255) is positioned upstream of at least one of said pollution control system (154) and said second heat exchanger (150).

10. The furnace system of one of the foregoing claims , wherein said at least one fluid is flue gas.

11. The furnace system of one of the foregoing claims, wherein said furnace system (310) is tangentially-fired for combusting a fuel in the presence of oxygen.

12. The furnace system of one of the foregoing claims, wherein the oxygen source is at least one of an air separation unit (160) and oxygen vessels.

13. The furnace system of claims 11 or 12, wherein at least one nozzle (380, 381, 382, 383) extends into said interior area (314), said nozzle (380, 381, 382, 383) having a passage extending therethrough for conveying a portion of said oxygen through said nozzle (380, 381, 382, 383) into said interior area (314).

## Patentansprüche

1. Feuerungssystem zum Verbrennen von Brennstoff und Sauerstoff, umfassend:
ein Sauerstoff-Brennstoff-Verbrennungsgefäß (112), das Brennstoff und Sauerstoff zum Verbrennen darin aufnimmt und ein Auslassende (116) und wenigstens eine Öffnung (120, 122) aufweist, die sich in einen inneren Bereich (114) öffnet, der durch das Sauerstoff-Brennstoff-Verbrennungsgefäß (112) definiert ist;
eine Sauerstoffquelle (160) zum Zuführen eines Stroms von Sauerstoff zu dem Sauerstoff-Brennstoff-Verbrennungsgefäß (112);
eine Rauchgasleitung (144), die mit dem Auslassende (116) verbunden ist und in Fluidverbindung mit dem inneren Bereich (114) steht;
einen Wärmetauscher (145), der in der Rauchgasleitung (144) angeordnet ist, zum Kühlen von wenigstens einem Fluid, das durch die Rauchgasleitung fließt;
eine Rücklaufleitung (155), umfassend eine zweite Leitung (152) und einen Verteiler (124), wobei die zweite Leitung (152) von der Rauchgasleitung (144) an einer Position stromabwärts bezogen auf den Wärmetauscher (145) zu der wenigstens einen Öffnung (120, 122) verläuft und Fluidverbindung zwischen der Rauchgasleitung (144) und dem inneren Bereich (114) bereitstellt, um einen größeren Massefluss zu dem Sauerstoff-Brennstoff-Verbrennungsgefäß (112) zu ermöglichen; und
eine Beförderungseinrichtung (156) zum Bewirken von Fluss des wenigstens einen Fluids durch die Rücklaufleitung in den inneren Bereich (114, 214), **dadurch gekennzeichnet, dass**
ein Ejektor (156) in der zweiten Leitung (152) angeordnet ist, um Fluss von einem oder mehreren Fluiden in den inneren Bereich (114) des Verbrennungsgefäßes (112) in Antwort auf von einer Steuerung (178) ausgegebene Befehle zu ermöglichen, und dadurch, dass die Sauerstoffquelle (160) dem Ejektor (156) über eine geeignete Rohrleitung (162) Sauerstoff zuführt.

2. Feuerungssystem gemäß Anspruch 1, wobei die Beförderungseinrichtung (156, 270) wenigstens teilweise in der Rückflaufleitung (155, 255) angeordnet ist.

3. Feuerungssystem gemäß Anspruch 1 oder 2, ferner umfassend eine Steuerung (178, 278), die der Beförderungseinrichtung ein Befehlssignal gibt, um den Fluss von wenigstens einem Fluid durch die Rücklaufleitung in den inneren Bereich (114) zu steuern.

4. Feuerungssystem gemäß Anspruch 1 bis 3, wobei die Beförderungseinrichtung wenigstens eines von einem Ventilator und einem Gebläse und einem Kompressor (270) umfasst.

5. Feuerungssystem gemäß Ansprüchen 1 bis 3, wobei die Beförderungseinrichtung den Ejektor (156) umfasst, dem ein Treibfluid zugeführt wird, um das wenigstens eine Fluid und das Treibfluid in den inneren Bereich (114, 214, 314) zu befördern.

6. Feuerungssystem gemäß Anspruch 5, wobei das Treibfluid Sauerstoff ist.

7. Feuerungssystem gemäß Anspruch 5, wobei das Treibfluid Dampf ist.

8. Feuerungssystem gemäß Anspruch 5, wobei das Treibfluid Rauchgas ist.

9. Feuerungssystem gemäß einem der vorstehenden Ansprüche, ferner umfassend:
ein Schadstoffminderungssystem (154) in Fluidverbindung mit der Rauchgasleitung (144, 244) zum Verarbeiten von Rauchgas, das aus dem inneren Bereich (114, 214, 314) ausgestoßen wird;
einen zweiten Wärmetauscher (150) in Fluidverbindung mit der Rauchgasleitung (144, 244); und wobei
die Rücklaufleitung (155, 255) stromaufwärts bezogen auf wenigstens eines von dem Schadstoffminderungssystem (154) und dem zweiten Wärmetauscher (150) angeordnet ist.

10. Feuerungssystem gemäß einem der vorstehenden Ansprüche, wobei das wenigstens eine Fluid Rauchgas ist.

11. Feuerungssystem gemäß einem der vorstehenden Ansprüche, wobei das Feuerungssystem (310) zum Verbrennen eines Brennstoffs in Gegenwart von Sauerstoff tangential befeuert wird.

12. Feuerungssystem gemäß einem der vorstehenden Ansprüche, wobei die Sauerstoffquelle wenigstens eines von einer Luftzerlegungseinheit (160) und Sauerstoffgefäßen ist.

13. Feuerungssystem gemäß Ansprüchen 11 oder 12, wobei wenigstens eine Düse (380, 381, 382, 383) in den inneren Bereich (314) ragt, wobei die Düse (380, 381, 382, 383) einen hindurch verlaufenden Durchgang zum Leiten eines Teils des Sauerstoffs durch die Düse (380, 381, 382, 383) in den inneren Bereich (314) aufweist.

## Revendications

1. Système de four pour brûler du combustible et de l'oxygène, comprenant :
un récipient de combustion d'oxy-combustible (112) qui reçoit du combustible et de l'oxygène destinés à brûler à l'intérieur de celui-ci, ayant une extrémité de sortie (116) et au moins une ouverture (120, 122), qui s'ouvre dans une zone intérieure (114) définie par ledit récipient de combustion d'oxy-combustible (112) ;
une source d'oxygène (160) pour alimentez un flux gazeux d'oxygène au récipient de combustion d'oxycombustible (112) ;
un conduit de fumée (144) raccordé à ladite extrémité de sortie (116) et en communication fluidique avec ladite zone intérieure (114) ;
un échangeur de chaleur (145) disposé dans ledit conduit de fumée (144) pour refroidir au moins un fluide s'écoulant à travers ledit conduit de fumée ;
un conduit de re-circulation (155) comprenant un deuxième conduit (152) et un collecteur (124), ce deuxième conduit (152) s'étendant depuis ledit conduit de fumée (144), dans une position en aval dudit échangeur de chaleur (145), jusqu'à ladite au moins une ouverture (120, 122), et fournissant une communication fluidique entre ledit conduit de fumée (144) et ladite zone intérieure (114) de façon à fournir un débit massique plus grand au récipient de combustion d'oxycombustible (112) ; et
un moyen de transport (156) pour entraîner l'écoulement d'au moins un fluide à travers ledit conduit de re-circulation et dans ladite zone intérieure (114, 214), **caractérisé en ce que**
un éjecteur (156) est positionné dans le deuxième conduit (152) pour faciliter l'écoulement d'un ou de plusieurs fluides dans la zone intérieure (114) du récipient de combustion (112) en réponse à des commandes envoyées par un contrôleur (178), et **en ce que** la source d'oxygène (160) fournit de l'oxygène à l'éjecteur (156) par l'intermédiaire d'une tuyauterie appropriée (162).

2. Système de four selon la revendication 1, dans lequel le moyen de transport (156, 270) est disposé au moins partiellement dans ledit conduit de recirculation (155, 255).

3. Système de four selon la revendication 1 ou 2, comprenant en outre un contrôleur (178, 278) qui fournit un signal de commande au moyen de transport, pour contrôler l'écoulement d'au moins un fluide à travers ledit conduit de re-circulation et dans ladite zone intérieure (114).

4. Système de four selon les revendications 1 à 3, dans lequel ledit moyen de transport comprend au moins soit un ventilateur, soit une soufflante, soit un compresseur (270).

5. Système de four selon les revendications 1 à 3, dans lequel ledit moyen de transport comprend l'éjecteur (156) ayant un fluide moteur alimenté à celui-ci pour transporter ledit au moins un fluide et ledit fluide moteur dans ladite zone intérieure (114, 214, 314).

6. Système de four selon la revendication 5, dans lequel ledit fluide moteur est de l'oxygène.

7. Système de four selon la revendication 5, dans lequel ledit fluide moteur est de la vapeur.

8. Système de four selon la revendication 5, dans lequel ledit fluide moteur est du gaz de fumée.

9. Système de four selon l'une quelconque des revendications précédentes, comprenant en outre :
un système de contrôle de la pollution (154) en communication fluidique avec ledit conduit de fumée (144, 244) pour traiter le gaz de fumée déchargé de ladite zone intérieure (114, 214, 314) ;
un deuxième échangeur de chaleur (150) en communication fluidique avec ledit conduit de fumée (144, 244) ; et dans lequel
ledit conduit de re-circulation (155, 255) est positionné en amont d'au moins soit ledit système de contrôle de la pollution (154), soit ledit deuxième échangeur de chaleur (150).

10. Système de four selon l'une quelconque des revendications précédentes, dans lequel ledit au moins un fluide est du gaz de fumée.

11. Système de four selon l'une quelconque des revendications précédentes, ledit système de four (310) étant à alimentation tangentielle pour brûler un combustible en la présence d'oxygène.

12. Système de four selon l'une quelconque des revendications précédentes, dans lequel la source d'oxygène est au moins soit une unité de séparation d'air (160), soit des récipients d'oxygène.

13. Système de four selon les revendications 11 ou 12, dans lequel au moins une buse (380, 381, 382, 383) s'étend dans ladite zone intérieure (314), ladite buse (380, 381, 382, 383) ayant un passage s'étendant à travers elle pour transporter une partie dudit oxygène à travers ladite buse (380, 381, 382, 383) et dans ladite zone intérieure (314).
